# EUROPEAN PATENT APPLICATION

(11) **EP 4 343 933 A1**
(43) Date of publication of application: **27.03.2024**
(21) Application number: 21940072.8
(22) Date of filing: 17.05.2021
(51) Int. Cl.: H01M 50/147, H01M 50/172

(54) **POSITIVE ELECTRODE CURRENT COLLECTOR DISC AND CYLINDRICAL BATTERY**

(71) Applicant: Microvast, Inc., Stafford, TX 77477 (US)
(72) Inventor: DENG, Guoyou, Huzhou Zhejiang 313000 (CN); SHEN, Xiaojie, Huzhou Zhejiang 313000 (CN); JIN, Yong, Huzhou Zhejiang 313000 (CN); WEI, Xiang, Huzhou Zhejiang 313000 (CN); SHEN, Qingyu, Huzhou Zhejiang 313000 (CN)
(74) Representative: Zaboliene, Reda
(86) International application number: PCT/CN2021/094137
(87) International publication number: WO 2022/241615

(57) **Abstract**

The present application provides a positive electrode current collector disc. The positive electrode current collector disc is located between a positive electrode tab and a positive electrode cover plate; the positive electrode current collector disc comprises a disc body and an electrical connection portion; the electrical connection portion extends from the disc body toward the positive electrode cover plate and protrudes; the disc body is in contact with the positive electrode tab; the electrical connection portion is in contact with the positive electrode cover plate. The present application greatly reduces the internal resistance of the positive electrode current collector disc, thereby improving the electrical conductivity of a battery; in addition, the electrical connector on the positive electrode current collector disc does not need to be bent in a "Z" shape, cracks are not prone to occurrence, assembly efficiency is high, and thus the positive electrode current collector disc satisfies industrial production requirements. The present application also provides a cylindrical battery.

## Description

### TECHNICAL FIELD

The present application relates to the technical field of batteries, and in particular, to a positive current collector plate and a cylindrical battery.

### BACKGROUND

With the development of electronic technology, lithium-ion batteries have been widely used due to their advantages of high specific power, long cycle life, good safety performance, and low pollution, etc. In order to increase the cell capacity of the battery and reduce the manufacturing cost of the battery, the diameter of the cylindrical battery also gradually increases. In order to meet the charging/discharging and heat dissipation requirements of large-diameter and high-capacity cylindrical batteries, the jelly roll of the cylindrical battery is designed with full tabs, and the positive and negative tabs of the jelly roll are connected to the positive and negative poles of the battery using positive and negative current collector plates. Usually, the electrical connector of the positive current collector plate is bent into a "Z" shape to connect the positive tabs of the jelly roll and the positive pole of the battery. This makes it easy for cracks to appear at the bending position of the electrical connector of the positive current collector plate. Further, the current path from the positive pole of the battery to the positive tabs of the jelly roll is long, thus the internal resistance of the positive current collector plate is large, resulting in more heat generated by the positive current collector plate during the charging and discharging process.

### SUMMARY

The object of the present application is to provide a positive current collector plate and a cylindrical battery, aiming to solve the shortcomings of the background technology mentioned above. The internal resistance of the positive current collector plate is greatly reduced by directly connecting the plate body and the positive cover plate through the electrical connection part, thereby improving the conductivity of the battery. In addition, the electrical connector on the positive current collector plate does not need to be bent in a "Z" shape, which is less prone to cracks and has high assembly efficiency, and is suitable for industrial production.

An embodiment of the present application provides a positive current collector plate for connecting the positive tabs and the positive cover plate of a battery, wherein the positive current collector plate is located between the positive tabs and the positive cover plate. The positive current collector plate includes a plate body and an electrical connection part. The electrical connection part extends and protrudes from the plate body towards the positive cover plate. The plate body is in contact with the positive tabs, and the electrical connection part is in contact with the positive cover plate. The positive cover plate of the present application serves as the positive pole of the battery.

In an achievable manner, a through hole is provided in the central position of the plate body. The electrical connection part is formed by extending and protruding from an outer edge of the through hole towards the positive cover plate.

In an achievable manner, the electrical connection part is a flat sheet structure. The positive cover plate is provided with a central hole, and the electrical connection part passes through the central hole and is bent to contact a top surface of the positive cover plate.

In an achievable manner, the electrical connection part has a circular cross-section. The positive cover plate is provided with a central hole, and the electrical connection part is inserted into and extends out of the central hole. A side wall of the electrical connection part is in contact with a side wall of the central hole.

In an achievable manner, the electrical connection part is a hollow truncated cone shaped structure with a gradually decreasing diameter in a direction towards the positive cover plate, and the angle between the side wall of the electrical connection part and the vertical direction is from 0 to 60°.

In an achievable manner, a height of the electrical connection part protruding out of the positive cover plate is from 0 to 2mm. A numerical value of minimum cross-sectional area (unit: mm²) of the electrical connection part is from 1/8 to 1 or from 1/5 to 1 of a numerical value of 1C current (unit: A).

In an achievable manner, a numerical value of welding area (unit: mm²) between the electrical connection part and the positive cover plate is from 1/8 to 1 or from 1/5 to 1 of a numerical value of 1C current (unit: A). A numerical value of contact area (unit: mm²) at the position where the electrical connection part is connected with the plate body is from 1/8 to 1 or from 1/5 to 1 of the numerical value of 1C current (unit: A).

Another embodiment of the present application also provides a cylindrical battery, which includes a jelly roll, a housing, and a positive cover plate. The cylindrical battery also includes the positive current collector plate as described above. The top of the housing is provided with an opening, and the positive cover plate is fixed at the opening. The jelly roll is located inside the housing. The top of the jelly roll is provided with positive tabs. The positive current collector plate is located between the positive tabs and the positive cover plate. The plate body is in contact with the positive tabs, and the electrical connection part is in contact with the positive cover plate.

In an achievable manner, the cylindrical battery further includes a negative current collector plate. The bottom of the jelly roll is provided with negative tabs. The negative current collector plate is located inside the housing, and two sides of the negative current collector plate are respectively in contact with the negative tabs and an inner wall of the housing.

In an achievable manner, the cylindrical battery further comprises an insulation sealing ring, an insulation gasket, and an explosion-proof plate. The insulation sealing ring is arranged around the outer edge of the positive cover plate, and the insulation sealing ring is located between the positive cover plate and the inner wall of the housing. The insulation gasket is arranged on a top surface of the positive current collector plate, and the insulation gasket is located between the positive current collector plate and the inner wall of the housing. The explosion-proof plate is sealed and connected to the top surface of the positive cover plate.

In the positive current collector plate provided in the embodiments of the present application, the electrical connection part is directly connected to the plate body and the positive cover plate, and the plate body is directly in contact with the positive tabs, thereby shortening the path of current from the positive cover plate to the positive tabs, greatly reducing the internal resistance of the positive current collector plate, improving the conductivity of the battery, and reducing the heat production of the positive current collector plate. Further, the electrical connector on the positive current collector plate does not need to be bent in a "Z" shape, which is not prone to cracks, and it is also convenient to be welded and fixed with the positive cover plate, which has high assembly efficiency and is suitable for industrial production.

### BRIEF DESCRIPTION OF THE DRAWINGS

FIG. 1 is a schematic diagram of the three-dimensional structure of the positive current collector plate in the first embodiment of the present application.
FIG. 2 is a front view of FIG. 1.
FIG. 3 is a cross-sectional view of the cylindrical battery in the first embodiment of the present application.
FIG. 4 is a schematic diagram of the three-dimensional structure of the positive current collector plate in the second embodiment of the present application.
FIG. 5 is a front view of FIG. 4.
FIG. 6 is a cross-sectional view of the cylindrical battery in the second embodiment of the present application.

### DETAILED DESCRIPTION OF PREFERRED EMBODIMENTS

Specific embodiments of the present application are further described in detail below in conjunction with the accompanying drawings. The following embodiments are used to illustrate the present application, but are not used to limit the scope of the present application.

The terms "first", "second", "third", "fourth", etc. (if any) in the specification and claims of the present application are used to distinguish similar objects, and are not used to describe a specific order or sequence.

The orientation terms "up", "down", "left", "right", "front", "back", "top", "bottom", etc. (if any) in the specification and claims of the present application are defined based on the positions of the structures and the positions between the structures in the figures, only for the clarity and convenience of expressing the technical solution. It should be understood that the use of these orientation terms should not limit the scope of the present application.

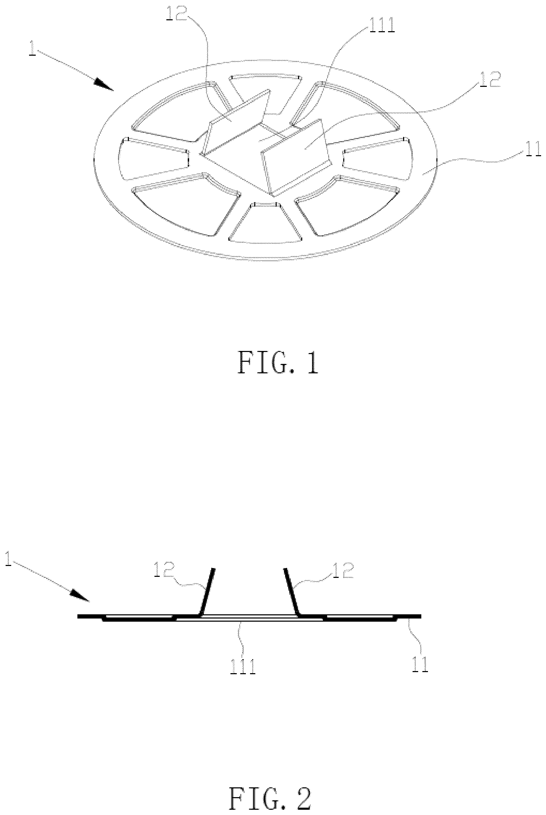

As shown in FIGS. 1 to 3, the first embodiment of the present application provides a positive current collector plate 1 for connecting positive tabs 21 and a positive cover plate 3 of a battery. The positive current collector plate 1 is located between the positive tabs 21 and the positive cover plate 3. The positive current collector plate 1 includes a plate body 11 and an electrical connection part 12. The electrical connection part 12 extends and protrudes from the plate body 11 towards the positive cover plate 3. The plate body 11 is in contact with the positive tabs 21, while the electrical connection part 12 is in contact with the positive cover plate 3.

As shown in FIGS. 1 and 2, in one embodiment, the plate body 11 is a disc-shaped structure with hollows and concaves. A through hole 111 is provided in the central position of the plate body 11, and the electrical connection part 12 is formed by extending and protruding from the outer edge of the through hole 111 towards the positive cover plate 3, that is, the electrical connection part 12 is located in the central position of the plate body 11.

As shown in FIGS. 1 to 3, in one embodiment, the electrical connection part 12 is a flat sheet structure, and the positive cover plate 3 is provided with a central hole 31. The electrical connection part 12 passes through the central hole 31 and is then bent to contact the top surface of the positive cover plate 3.

Specifically, in this embodiment, the number of the electrical connection part 12 is two, and the two electrical connection parts 12 are arranged opposite to each other and are respectively provided on two sides of the through hole 111. Of course, in other embodiments, the number of the electrical connection part 12 can be one or more. Meanwhile, in this embodiment, the electrical connection part 12 is a rectangular metal sheet structure. Of course, the electrical connection part 12 can also have other structures such as quadrilateral (e.g., trapezoid, parallelogram, etc.), triangle, or semicircle, which is not limited here. During assembly, the two electrical connection parts 12 extend out of the central hole 31 of the positive cover plate 3 and then are respectively bent towards two sides to form bent portions which are in overlapping contact with the top surface of the positive cover plate 3, and then the portions where the bent portions are in overlapping contact with the positive cover plate 3 are welded and fixed.

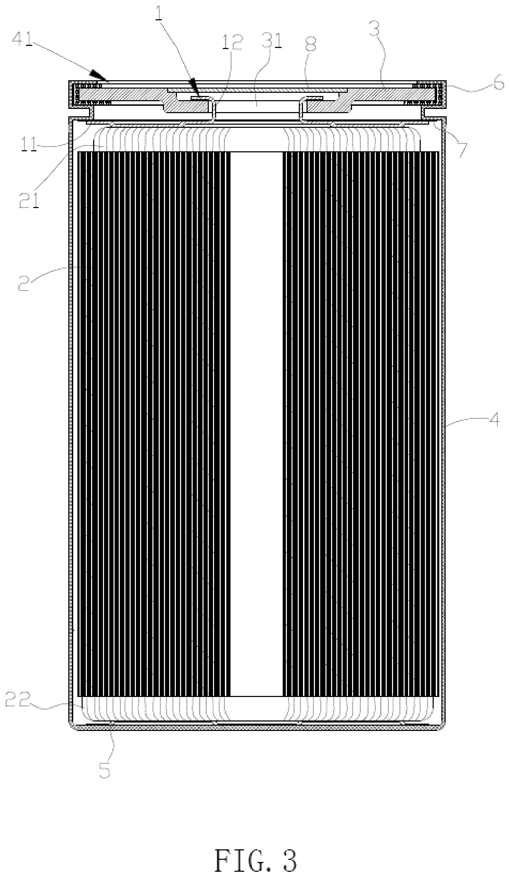

As shown in FIG. 3, in one embodiment, the height of the electrical connection part 12 protruding out of the positive cover plate 3 is from 0 to 4mm, or from 0 to 2mm. The protruded portion is mainly used to facilitate the welding between the electrical connection part 12 and the positive cover plate 3.

In another embodiment, the height of the electrical connection part 12 protruding out of the positive cover plate 3 is from 0 to 1mm.

As shown in FIGS. 1 and 2, in one embodiment, the numerical value of the minimum cross-sectional area (unit: mm²) of the electrical connection part 12 is from 1/8 to 1 or from 1/5 to 1 of the numerical value of 1C current (unit: A).

As shown in FIG. 3, in one embodiment, the numerical value of the welding area (unit: mm²) between the electrical connection part 12 and the positive cover plate 3 is from 1/8 to 1 of the numerical value of 1C current (unit: A), and the numerical value of the contact area (unit: mm²) at the position where the electrical connection part 12 is connected with the plate body 11 is from 1/8 to 1 of the numerical value of 1C current (unit: A).

Specifically, when the ampere value of the current during battery discharge is equal to the ampere hour value of the battery capacity, it is called 1C discharge. In theory, 1C discharge can fully discharge all the electrical energy of a fully charged battery in one hour. For example, if the battery capacity of a certain battery is 3000mAh (i.e., 3Ah) and a current of 3A is used for discharge, the battery can be fully discharged in one hour. 3A is the 1C current of the battery. Then, the welding area between the electrical connection part 12 and the positive cover plate 3 in the battery is from 3/8 to 3 mm², and the contact area at the position where the electrical connection part 12 is connected with the plate body 11 is from 3/8 to 3 mm².

In another embodiment, the numerical value of the welding area (unit: mm²) between the electrical connection part 12 and the positive cover plate 3 is from 1/5 to 1 of the numerical value of 1C current (unit: A), and the numerical value of the contact area (unit: mm²) at the position where the electrical connection part 12 is connected with the plate body 11 is from 1/5 to 1 of the numerical value of 1C current (unit: A).

As shown in FIG. 3, the first embodiment of the present application also provides a cylindrical battery, which includes a jelly roll 2, a housing 4, and a positive cover plate 3. The cylindrical battery also includes the positive current collector plate 1 mentioned above. The top of the housing 4 is provided with an opening 41, and the positive cover plate 3 is fixed at the opening 41. The jelly roll 2 is located inside the housing 4, and the top of the jelly roll 2 is provided with the positive tabs 21. The positive current collector plate 1 is located between the positive tabs 21 and the positive cover plate 3. The plate body 11 is in contact with the positive tabs 21, and the electrical connection part 12 is in contact with the positive cover plate 3.

As shown in FIG. 3, in one embodiment, the cylindrical battery also includes a negative current collector plate 5. The bottom of the jelly roll 2 is provided with negative tabs 22, and the negative current collector plate 5 is located inside the housing 4. Two sides of the negative current collector plate 5 are respectively in contact with the negative tabs 22 and the inner wall of the housing 4.

As shown in FIG. 3, in one embodiment, both the positive tabs 21 and the negative tabs 22 adopt a full tab design.

As shown in FIG. 3, in one embodiment, the cylindrical battery also includes an insulation sealing ring 6, an insulation gasket 7, and an explosion-proof plate 8. The insulation sealing ring 6 is arranged around the outer edge of the positive cover plate 3, and the insulation sealing ring 6 is located between the positive cover plate 3 and the inner wall of the housing 4. The insulation gasket 7 is arranged on the top surface of the positive current collector plate 1, and the insulation gasket 7 is located between the positive current collector plate 1 and the inner wall of the housing 4. The explosion-proof plate 8 is sealed and connected to the top surface of the positive cover plate 3.

Specifically, the housing 4 is a steel housing, the positive tabs 21 are electrically connected to the positive cover plate 3 through the positive current collector plate 1, and the negative tabs 22 are electrically connected to the housing 4 through the negative current collector plate 5. During the assembly process of the battery, the positive current collector plate 1 is separated from the housing 4 by the insulation gasket 7, and the positive cover plate 3 is separated from the housing 4 by the insulation sealing ring 6. Then, the positive cover plate 3 and the housing 4 are sealed by compressing the insulation sealing ring 6 through pier sealing after a rolled groove being mechanically formed on the housing 4. After rolling, the positive current collector plate 1 and the positive cover plate 3 are welded, and finally the explosion-proof plate 8 is welded for sealing. The cylindrical battery greatly improves its conductivity due to the shortened path of current from the positive tabs 21 to the positive cover plate 3.

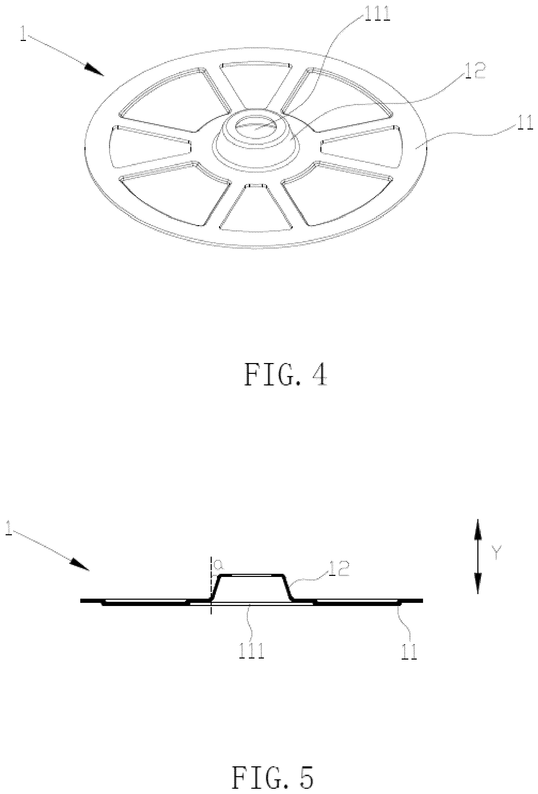

As shown in FIGS. 4 to 6, the second embodiment of the present application provides a positive current collector plate 1. The electrical connection part 12 has a circular cross-section. The positive cover plate 3 is provided with a central hole 31, and the electrical connection part 12 is inserted into and extends out of the central hole 31. The side wall of the electrical connection part 12 is in contact with the side wall of the central hole 31. During assembly, after the electrical connection part 12 extends out of the central hole 31, the side wall of the electrical connection part 12 and the side wall of the central hole 31 are fixed by welding.

As shown in FIGS. 4 to 6, the electrical connection part 12 has a hollow truncated cone shaped structure with a gradually decreasing diameter in the direction towards the positive cover plate 3. The angle a between the side wall of the electrical connection part 12 and the vertical direction Y is from 0 to 60° (the angle a is also known as the drawing angle). The truncated cone shaped structure facilitates the electrical connection part 12 to smoothly pass through the central hole 31 of the positive cover plate 3.

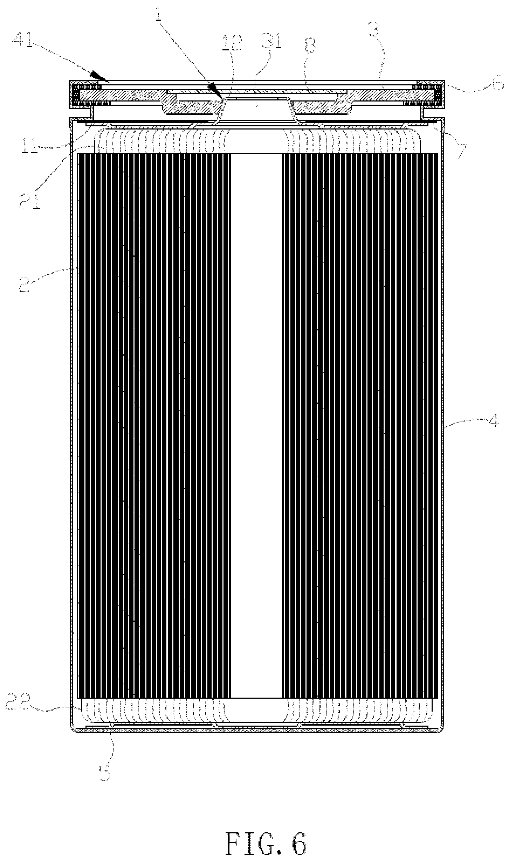

As shown in FIG. 6, in one embodiment, the height of the electrical connection part 12 protruding out of the positive cover plate 3 is from 0 to 2mm. The protruded portion is mainly used to facilitate the welding between the electrical connection part 12 and the positive cover plate 3.

In another embodiment, the height of the electrical connection part 12 protruding out of the positive cover plate 3 is from 0 to 1mm.

As shown in FIG. 6, in one embodiment, the numerical value of the welding area (unit: mm²) between the electrical connection part 12 and the positive cover plate 3 is from 1/8 to 1 of the numerical value of 1C current (unit: A), and the numerical value of the contact area (unit: mm²) at the position where the electrical connection part 12 is connected with the plate body 11 is from 1/8 to 1 of the numerical value of 1C current (unit: A).

In another embodiment, the numerical value of the welding area (unit: mm²) between the electrical connection part 12 and the positive cover plate 3 is from 1/5 to 1 of the numerical value of 1C current (unit: A), and the numerical value of the contact area (unit: mm²) at the position where the electrical connection part 12 is connected with the plate body 11 is from 1/5 to 1 of the numerical value of 1C current (unit: A).

As shown in FIGS. 4 and 5, in one embodiment, the numerical value of the minimum cross-sectional area (unit: mm²) of the electrical connection part 12 is from 1/8 to 1 or from 1/5 to 1 of the numerical value of 1C current (unit: A).

As shown in FIG. 6, the second embodiment of the present application also provides a cylindrical battery using the positive current collector plate 1 mentioned above. The other structures of the cylindrical battery are the same as those of the first embodiment, and will not be further described here.

In the positive current collector plate 1 provided in the embodiments of the present application, the electrical connection part 12 is directly connected to the plate body 11 and the positive cover plate 3, and the plate body 11 is directly in contact with the positive tabs 21, thereby shortening the path of current from the positive cover plate 3 to the positive tabs 21, greatly reducing the internal resistance of the positive current collector plate 1, improving the conductivity of the battery, and reducing the heat production of the positive current collector plate 1. Further, the electrical connector 12 on the positive current collector plate 1 does not need to be bent in a "Z" shape, which is not prone to cracks, and it is also convenient to be welded and fixed with the positive cover plate 3, which has high assembly efficiency and is suitable for industrial production. Therefore, the positive current collector plate 1 provided in the embodiments of the present application solves the problems of high heat production, bending of electrical connectors during assembly, easy cracking, low assembly efficiency, and poor battery conductivity in traditional cylindrical full tab batteries.

The above is only specific embodiments of the present application, but the scope of protection of the present application is not limited to this. Any person skilled in the technical field can easily think of changes or replacements within the technical scope disclosed by the present application, which should also be covered by the scope of protection of the present application. Therefore, the scope of protection of the present application shall be defined by the appended claims.

## Claims

1. A positive current collector plate, wherein the positive current collector plate (1) is located between positive tabs (21) and a positive cover plate (3), the positive current collector plate (1) comprises a plate body (11) and an electrical connection part (12), the electrical connection part (12) extends and protrudes from the plate body (11) towards the positive cover plate (3), the plate body (11) is in contact with the positive tabs (21), and the electrical connection part (12) is in contact with the positive cover plate (3).

2. The positive current collector plate as claimed in claim **1,** wherein a through hole (111) is provided in the central position of the plate body (11), the electrical connection part (12) is formed by extending and protruding from an outer edge of the through hole (111) towards the positive cover plate (3).

3. The positive current collector plate as claimed in claim **1,** wherein the electrical connection part (12) is a flat sheet structure, the positive cover plate (3) is provided with a central hole (31), the electrical connection part (12) passes through the central hole (31) and is bent to contact a top surface of the positive cover plate (3).

4. The positive current collector plate as claimed in claim **1,** wherein the electrical connection part (12) has a circular cross-section, the positive cover plate (3) is provided with a central hole (31), the electrical connection part (12) is inserted into and extends out of the central hole (31), and a side wall of the electrical connection part (12) is in contact with a side wall of the central hole (31).

5. The positive current collector plate as claimed in claim **4,** wherein the electrical connection part (12) is a hollow truncated cone shaped structure with a gradually decreasing diameter in a direction towards the positive cover plate (3), and the angle (a) between the side wall of the electrical connection part (12) and the vertical direction (Y) is from 0 to 60°.

6. The positive current collector plate as claimed in any one of claims **3** to **5,** wherein a height of the electrical connection part (12) protruding out of the positive cover plate (3) is from 0 to 2mm, a numerical value of minimum cross-sectional area (unit: mm²) of the electrical connection part (12) is from 1/8 to 1 or from 1/5 to 1 of a numerical value of 1C current (unit: A).

7. The positive current collector plate as claimed in any one of claims **1** to **5,** wherein a numerical value of welding area (unit: mm²) between the electrical connection part (12) and the positive cover plate (3) is from 1/8 to 1 or from 1/5 to 1 of a numerical value of 1C current (unit: A); a numerical value of contact area (unit: mm²) at the position where the electrical connection part (12) is connected with the plate body (11) is from 1/8 to 1 or from 1/5 to 1 of a numerical value of 1C current (unit: A).

8. A cylindrical battery, comprising a jelly roll (2), a housing (4), and a positive cover plate (3), wherein the cylindrical battery further comprises the positive current collector plate (1) as claimed in any one of claims **1** to **7,** the top of the housing (4) is provided with an opening (41), the positive cover plate (3) is fixed at the opening (41), the jelly roll (2) is located inside the housing (4), the top of the jelly roll (2) is provided with the positive tabs (21), the positive current collector plate (1) is located between the positive tabs (21) and the positive cover plate (3), the plate body (11) is in contact with the positive tabs (21), and the electrical connection part (12) is in contact with the positive cover plate (3).

9. The cylindrical battery as claimed in claim **8,** wherein the cylindrical battery further comprises a negative current collector plate (5), the bottom of the jelly roll (2) is provided with negative tabs (22), the negative current collector plate (5) is located inside the housing (4), and two sides of the negative current collector plate (5) are respectively in contact with the negative tabs (22) and an inner wall of the housing (4).

10. The cylindrical battery as claimed in claim **8,** wherein the cylindrical battery further comprises an insulation sealing ring (6), an insulation gasket (7), and an explosion-proof plate (8), the insulation sealing ring (6) is arranged around the outer edge of the positive cover plate (3), and the insulation sealing ring (6) is located between the positive cover plate (3) and the inner wall of the housing (4), the insulation gasket (7) is arranged on a top surface of the positive current collector plate (1), and the insulation gasket (7) is located between the positive current collector plate (1) and the inner wall of the housing (4), the explosion-proof plate (8) is sealed and connected to the top surface of the positive cover plate (3).
